# EUROPEAN PATENT SPECIFICATION

(11) **EP 3 410 057 B1**
(45) Date of publication and mention of the grant of the patent: **15.06.2022**
(21) Application number: 18174698.3
(22) Date of filing: 29.05.2018
(51) Int. Cl.: F41H 11/00

(54) **DRONE-BASED ACTIVE PROTECTION SYSTEM**
DROHNENBASIERTES AKTIVES SCHUTZSYSTEM
SYSTÈME DE PROTECTION ACTIVE BASÉ SUR UN DRONE

(30) Priority: 29.05.2017 IL 25258317
(43) Date of publication of application: 05.12.2018
(73) Proprietor: Plasan Sasa Ltd., 1387000 M.P. Marom Hagalil (IL)
(72) Inventor: YESHURUN, Yehoshua, 34403 Haifa (IL)
(74) Representative: Modiano, Gabriella Diana

(56) References cited:
- EP-A1- 2 778 598
- EP-A1- 2 778 598
- US-A1- 2005 051 667
- US-A1- 2005 051 667
- US-A1- 2010 042 269
- US-A1- 2015 276 353

## Description

### TECHNOLOGICAL FIELD

The presently disclosed subject matter related to protection systems for vehicles and other targets, in particular to systems configured for facilitating deployment of active protection.

### BACKGROUND

Active protection systems are typically provided to neutralize incoming threats to a target, such as armored vehicles, by destroying or diverting it, or otherwise removing the danger posed thereby. Active protection systems generally fall into two broad categories - hard-kill countermeasures and soft-kill countermeasures. The former usually involves neutralizing the threat by impacting it by other materials such as a projectile, and the latter usually involves exploiting physical properties associated with or relied on for operation of the threat (e.g., electromagnetic, acoustic, or other signature) to neutralize it.

For many kinds of countermeasures, the threat should be neutralized as far as is practical from the target. In some cases (in particular with hard-kill countermeasures), neutralization of the threat is accompanied by an explosion, which itself could damage the target if it occurs too closely thereto. In other cases (for example wherein the threat is diverted), a suitable distance is necessary to ensure that the neutralization properly occurs.

US 2015/0276353 discloses an armored vehicle which includes a basic armored vehicle having a predetermined basic external armor, a modularized armor structure exchangeably attached to the basic external armor, and an unmanned aerial vehicle loaded on the modularized armor structure. The modularized armor structure includes an unmanned aerial vehicle loading section configured to load the unmanned aerial vehicle, an armoring material structure formed of armoring material, and an attaching section used to exchangeably attach the modularized armor structure to the basic armored vehicle.

US 2005/0051667 discloses a flying micro-rotorcraft unit for remote tactical and operational missions. The unit includes an elongated body having an upper and a lower end. The body defines a vertical axis. The unit further includes a navigation module including means for determining a global position of the elongated body during flight of the unit. Rotor means of the unit is coupled to the upper end of the elongated body for generating a thrust force that acts in a direction parallel to the vertical axis to lift the elongated body into the air. The rotor means is located between the elongated body and the navigation module.

EP 2 778 598 discloses a method performed by an apparatus comprising a first module and a second module. The first module is mounted on an unmanned vehicle and arranged to act upon a payload also mounted on the vehicle. The second module is remote from the unmanned vehicle. The method comprises receiving, by the second module, an instruction to activate the payload; generating, by the second module, a plurality of activation codes and sending those codes to the first module; determining, by the first module, whether or not each of the received activation codes is valid; and if the codes are valid, activating the pavload, or, if the codes are not valid, preventing activation of the payload. Each code comprises a time dependent portion, a single-use portion, and an identifier for the unmanned vehicle.

US 2010/0042269 discloses a method of protecting an asset using at least one unmanned vehicle. The method includes establishing a plurality of boundaries around the asset. The boundaries define edges of zones. The method further includes observing a target in a first one of the zones. The method further includes deploying the unmanned vehicle to a location in a vicinity of the asset and tasking the vehicle to perform a first defensive measure as long as the target remains in the first zone. If the target crosses a boundary from the first zone into a second one of the zones, where the second zone is more proximate to the asset than the first zone, the method further includes tasking the vehicle to perform a second defensive measure.

### SUMMARY

The invention is a system as defined by claim 1. According to one aspect of the presently disclosed subject matter, there is provided a system for facilitating active protection of a target from a threat, the system comprising:
- one or more platforms configured for directing operation of the system; and
- a plurality of unmanned aerial vehicles (UAV's) configured to operate in the vicinity of the target, and to facilitate detection and/or neutralizing of the threat,
wherein the platform is configured for autonomously detecting and providing instructions for neutralizing the threat, and wherein each of the UAV's is configured for communicating (e.g., directly, without relying on any system external thereto and/or to the target) with the platform (e.g., the platform being configured to issue instructions to the UAV's).

At least some of the UAV's may be configured to hover in a fixed location.

At least some of the UAV's may be fixed-wing aircraft.

At least some of the UAV's may each be connected to the platform and/or the target by a cable for being powered thereby.

At least some of the UAV's may be configured to receive power from the platform and/or the target wirelessly.

At least some of the UAV's may each comprise a battery.

At least some of the UAV's may comprise surveillance equipment configured to facilitate detection of the threat. The UAV's may be configured for transmitting surveillance data to the platform, the platform being configured for processing the surveillance data to detect the threat.

The surveillance equipment may comprise one or more selected from the group including an optical sensor, an infrared sensor, a motion sensor, a thermal sensor, and a pulse-Doppler radar.

The platform may be configured to communicate with an active protection system for directing operation thereof.

One or more of the UAV's may comprise the active protection system.

The platform may comprise the active protection system.

The active protection system may comprise one or more hard-kill countermeasures.

The hard-kill countermeasures may be selected from the group including one or more projectiles and a laser weapon (i.e., configured to emit a beam of directed energy).

One or more of the UAV's may be configured for intercepting the threat to neutralize it (i.e., the UAV itself constituting the hard-kill countermeasure).

The active protection system may comprise one or more soft-kill countermeasures.

The soft-kill countermeasures may be selected from the group including chaff, radar jamming, electromagnetic pulses, a laser dazzler, and a radio frequency decoy.

Each of the UAV's may comprise a location sensor configured to determine the absolute location thereof.

The system may be configured to determine the relative location of each of the UAV's with respect to the platform and/or other of the UAV's.

The platform may be configured for installation on the target.

The target may be a vehicle, for example an armored vehicle.

The system may be configured to implement machine learning to improve performance of at least one task.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
Fig. 1 is a schematic illustration of an active protection system according to the presently disclosed subject matter; and
Fig. 2 is a schematic illustration of an example of a configuration of the active protection system illustrated in Fig. 1.

### DETAILED DESCRIPTION

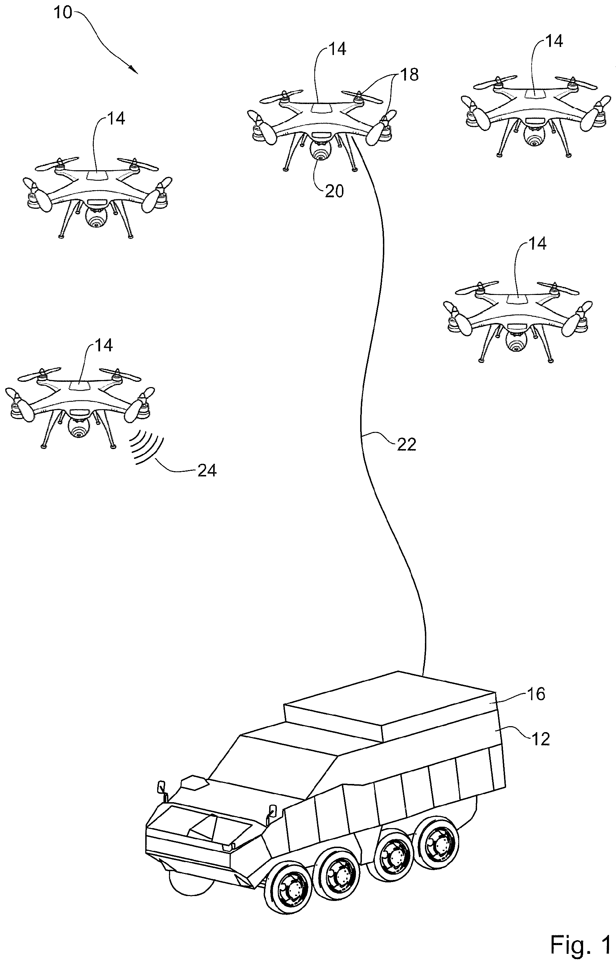

As illustrated in Fig. 1, there is provided a system, which is generally indicated at 10. The system 10 is configured to facilitate active protection of a target such as a vehicle 12, which may be a tank, a personnel carrier, a marine vehicle, an airborne vehicle, etc., from an incoming threat. The threats are rockets or missiles.

While the vehicle 12 is not necessarily a component of the system 10, references herein to the system 10 may, for the sake of clarity, include the vehicle as well, unless otherwise clear from context. References to *facilitating protection from a threat* (including similar and/or related terms) may comprise some or all activities connected to an operation to neutralize a threat or to otherwise remove a target from being in danger therefrom, including, but not limited to, detecting the threat, destroying it, damaging it, diverting it, prematurely activating it, slowing it, etc.

It will be further appreciated that while the present disclosure and its accompanying drawing are directed toward a system for protecting a land-based vehicle, such a system may be provided for facilitating active protection of other potential targets, including, but not limited to, air vehicles, marine vehicles, buildings, outdoor venues, geographic locations, machinery, etc., without departing from the scope of the presently disclosed subject matter, *mutatis mutandis.*

The system 10 comprises a plurality of unmanned aerial vehicles (UAVs) 14, and at least one central platform 16, configured for coordinating operation of the system. According to some examples, the platform 16 may be configured for installation on the vehicle 12, for example being provided as an independent unit, e.g., configured for mounting on the vehicle 12, or it may be configured for integration with an existing system, e.g., of the vehicle (for example, it may comprise software which is installed on an existing processing unit, e.g., the mission computer, of the vehicle; in such a case, the vehicle itself constitutes the platform of the system). According to other examples, the platform 16 may be configured for being separate and/or remote from the vehicle 12, for example in a separate vehicle configured to maintain a close proximity to the vehicle, or in a separate location altogether. The platform thus comprises a system controller, which may be a dedicated controller, or part of a controller of an external system, for example one associated with the vehicle 12.

It will be appreciated that while herein the specification and claims, the term *controller* is used with reference to a single element, it may comprise a combination of elements, which may or may not be in physical proximity to one another, without departing from the scope of the presently disclosed subject matter, *mutatis mutandis* (i.e., the term *controller* is used as a logical description, not necessarily as a constructional description of a particular physical computing device). Furthermore, descriptions herein the specification and recitation in the appended claims of multiple controllers includes, and may be embodied in practice by, a single controller. Similarly, such descriptions include providing multiple controllers, with functions described herein as being assigned to a particular controller being carried out in practice by a different one of the controllers, without departing from the scope of the presently disclosed subject matter, *mutatis mutandis.* In addition, disclosure herein (including recitation in the appended claims) of a controller carrying out, being configured to carry out, or other similar language, implicitly includes other elements of the system 10 carrying out, being configured to carry out, etc., those functions, without departing from the scope of the presently disclosed subject matter, *mutatis mutandis.*

While the platform 16 is described herein with reference to and illustrated in the accompanying drawings as being associated with the vehicle 12, it will be appreciated that it may be associated with a different vehicle, a stationary location, etc., without departing from the scope of the presently disclosed subject matter, *mutatis mutandis.* It will be further appreciated that the platform 16 may be provided, *mutatis mutandis,* such that it is adapted for use with a land vehicle, a marine vehicle, an airborne vehicle such as one of the UAV's 14, etc., without departing from the scope of the presently disclosed subject matter.

The UAV's are configured to operate (i.e., physically fly during operation) in the vicinity of the vehicle 12, such that it may facilitate in rapidly detecting and/or neutralizing fast-moving threats, such as anti-tank missiles, etc. According to some examples, the vicinity may be considered to be within a distance which does not exceed that distance from which the threat is launched. According to other examples, the vicinity is within about 100 m (about 328 ft.). It will be appreciated that the specific distance may vary, for example exceeding about 100 m (about 328 ft.), but still being less than the distance from which the threat is launched.

Each of the UAV's 14 may be associated with a UAV controller (not illustrated) for directing its operation, in particular the operation of its elements, as will be described below. In addition, the UAV controller is configured to communicate, directly and/or indirectly, with elements of the UAV 14, for example to receive information and/or data therefrom, and/or to direct operation thereof. It may comprise one or more communications modules to facilitate transmission/receipt of data between elements of the UAV 14, other UAV's, the platform 16 (e.g., the platform controller), and/or external systems, e.g., to be directly controlled thereby.

The UAV controller may be provided as an element of the UAV 14 or externally thereto, for example on the platform 16, with elements of the UAV (for example as described below) configured for communicating therewith.

The UAV's 14 may each comprise a location sensor (not illustrated) in order to determine its location. According to some non-limiting examples, the location sensor is configured to determine the absolute location of the UAV 14, and may thus comprise a global positioning system (GPS) receiver. According to other non-limiting examples, the location sensor is configured to determine the location of the UAV 14 with relation to other elements of the system 10, such as other UAV's, the platform 16, the vehicle 12, and/or with relation to an external system. The location sensor may be further configured to determine the orientation of the UAV 14, absolutely and/or with respect to other elements of the system 10 and/or an external system.

According to further examples, the location sensor is configured to facilitate determining the absolute and/or relative location of the UAV 14, as described above. It may be further configured to utilize data regarding its relative position to other elements, together with GPS data from those elements, in order to refine the calculation of its absolute position, and/or vice versa.

According to some examples, each of the UAV's 14 is configured to move in any direction and/or to hover, i.e., to remain airborne in a single position. Accordingly, it may comprise a plurality of rotors 18 designed to cooperate to enable movement and/or hovering thereof. According to other examples (not illustrated), each of the UAV's may be a fixed-wing aircraft. According to further examples, the system 10 comprises both hovering and fixed-wing UAV's.

The system 10 is configured to detect an incoming threat. According to some examples, the platform 16 is configured to perform the detection. Information for facilitating the detection may be collected in any known way, for example using sensors associated with the platform 16 and/or with the vehicle 12, from an external source (e.g., surveillance vehicles, satellites, etc.), and/or from any other suitable source.

Alternatively or additionally, one or more of the UAV's 14 may comprise surveillance equipment 20 configured to facilitate detection of an incoming threat. The UAV 14 may be configured to transmit data gathered by the surveillance equipment 20 to the platform controller and/or the UAV controller for further processing (i.e., to identify the type of or specific threat, and/or to identify whether the threat's trajectory, and assess the likelihood of it impacting the vehicle and/or where on the vehicle the impact is likely to occur). The surveillance equipment 20 may comprise one or more of an optical sensor, infrared sensor, a motion sensor, a thermal sensor, and a pulse-Doppler radar. The surveillance equipment 20 may additionally or alternatively comprise any other device which is suitable to facilitate detection of an oncoming threat.

As mentioned, the platform controller may be configured to communicate with the surveillance equipment 20 and to analyze surveillance data collected thereby in order to determine the presence, identity, trajectory, and/or any other necessary parameter of an incoming threat. According to some examples, the platform controller is configured to utilize surveillance data collected from other sources, e.g., from other UAV's 14 in the system 10 and/or from an external system, in making the determination, either in addition to surveillance date received from the UAV 14 or in addition thereto.

It will be appreciated that any surveillance data may also include location data, e.g., associated with the device performing the surveillance.

According to some examples, multiple UAV's 14 may be configured to independently determine the presence, identity, trajectory, and/or any other necessary parameter of an incoming threat, and verify their determinations with those of the others. They may be configured to selectively perform this verification, e.g., based on the amount of time determined until impact of the threat. Similarly, the platform controller may be configured to make independent assessments of the presence, identity, trajectory, and/or any other necessary parameter of an incoming threat, each based on surveillance data from different subsets of sources (e.g., different UAV's, UAV's and external sources, etc.) and to verify the assessments with one another.

The platform 16 and/or one or more of the UAV's 14 may be configured to facilitate neutralizing a detected threat. They may be designed to accomplish this, e.g., by directing deployment of one or more countermeasures, by directly intercepting the threat, or by a combination of both. The platform 16/UAV's 14 may be further configured to monitor the threat to determine the success of the neutralization attempt, optionally directing deployment of a second countermeasure in the event of failure.

The countermeasure may be any suitable arrangement for neutralizing the threat before is impacts the vehicle 12. Typically, the countermeasure is designed to be effective to neutralize a specific type of threat. A threat may be considered to be neutralized if it no longer threatens the vehicle 12, or if its threat to the vehicle is reduced. This may include, *inter alia,* destruction of the threat, causing it to initiate prematurely and/or improperly, inhibiting its ability to initiate, diverting it, disturbing its stability, implementing countermeasures which interfere with its operation and/or guidance system, etc. A countermeasure may be configured to use one or several methods to neutralize a threat.

Accordingly, the platform 16 and/or one or more of the UAV's 14 may be configured to direct deployment of the countermeasure most suited against an identified threat, and/or to direct deployment of two or more types of countermeasures against a single threat.

According to some examples, the countermeasure is provided on one of the UAV's 14 itself, or on the platform 16, for deployment. According to some examples, the countermeasure is an external one, i.e., not deployed by the system 10 at all; rather, according to these examples a UAV 14 or other element of the system directs an external apparatus or system to deploy the countermeasure.

The countermeasures may comprise one or more hard-kill countermeasures including, but not limited to, projectiles, pellets, a laser weapon, etc. The countermeasures may comprise one or more soft-kill countermeasures including, but not limited to, chaff, radar jamming, one or more electromagnetic pulses, a laser dazzler, radio frequency decoys, etc.

According to some non-limiting examples, the platform 16 and/or one or more of the UAV's 14 carries one or more countermeasures, which may be of the same type or of different types. Accordingly, it may be configured to:
- act autonomously to identify and deploy countermeasures to neutralize a threat;
- utilize data from an external source, such as one or more of the other UAV's 14 of the system 10, to identify a threat which it then deploys countermeasures to neutralize; and/or
- be directed to deploy countermeasures to neutralize a threat identified by an external source.

According to other non-limiting examples, the platform 16 and/or one or more of the UAV's 14 is configured to direct that one or more external countermeasures be deployed. The external countermeasure may be carried by another of the UAV's 14 or an external system. When directing the deployment of an external countermeasure, platform 16 and/or one or more of the UAV's 14 may further provide data regarding the identity, trajectory, and/or any other relevant parameter of the threat to the apparatus which deploys the countermeasure. The external countermeasure may be part of an active protection system of the vehicle 12.

According to further non-limiting examples, the system 10 is configured to neutralize the threat by directly intercepting it with one of the UAV's 14. According to some examples, the UAV 14 is be configured to utilize this option as a last resort, for example if time does not permit deployment of a different countermeasure, if no other countermeasures suitable for the threat are available, etc. Direct interception by a UAV 14 may be accomplished in one of several ways:
- A UAV 14 may be configured to direct itself into the path of an incoming threat and/or to attract the threat away from the vehicle 12 and towards it.
- Other elements of the system 10 (e.g., other UAV's 14 and/or the platform 16) may be configured to assume control of an intercepting UAV and direct it into the path of an incoming threat.

According to either of the above, other UAV's 14 and/or elements of the system 10 may be configured to monitor the threat to determine the success of the neutralization attempt.

According to some examples, some or all of the UAV's 14 may be functionally connected to other elements of the system 10, for example to receive power therefrom and/or to facilitate communication therebetween.

For example, some or all of the UAV's 14 may be functionally connected to the vehicle 12 or the platform 16 by a cable 22. In addition or alternatively, some or all of the UAV's 14 may be may be functionally connected thereto wirelessly, as indicated at 24, for example using microwave radiation, or by using multi-coil magnetic beamforming, for example as disclosed in *"*Magnetic MIMO: How to Charge Your Phone in Your Pocket" by Jouya Jadidian & Dina Katabi, published in "Proceedings of the 20th annual International Conference on Mobile Computing and Networking", by the Association for Computing Machinery, Pages 495-506, the entire contents of which are incorporated herein by reference. It will be appreciated that some methods of wireless power transmissions may be used to facilitate determine the relative location of the UAV 14 with respect to the transmitter, *mutatis mutandis.*

According to some non-limiting examples, the UAV 14 is configured to operate directly on power supplied by other elements of the system 10 (e.g., via the cable 22, supplied wirelessly, etc.).

According to other non-limiting examples, the UAV 14 comprises a battery (not illustrated) for powering its operation, and is configured to utilize electrical power supplied by other elements of the system 10 to recharge the battery. According to some modifications, the UAV 14 may be configured to selectively use power directly supplied by other elements of the system 10 or from the battery, for example switching from battery power when functionally connected to other elements of the system (e.g., if the cable 22 becomes detached, if the wireless transmission is interrupted, etc.). According to these examples, the UAV 14 may comprise a battery which is smaller than one which would be required if no external source of power were available during flight. In addition, UAV's 14 according to these examples may operate disconnected from the cable 22 for a period of time if necessary (e.g., when directly intercepting an incoming threat).

As mentioned, the functional connection between the UAV 14 and other elements of the system 10 may include communication therebetween. The information may comprise one or more selected from the group including, but not limited to, data gathered thereby, data gathered by other UAVs, instructions by and/or for the UAV for deployment of one or more countermeasures (for example as described above), etc.

According to some non-limiting examples, the UAV controller is configured to perform minimal processing of data gathered thereby, being configured to transmit raw data collected to another element of the system 10, such as the platform 14, for processing. This may lower the power required by the UAV 14, and may further enhance the overall processing efficiency of the system 10, as data collected by several UAV's 14 may be processed together, thereby eliminating the need to correlate information from each UAV 14 after initial processing thereby. In addition, there may be fewer constraints associated with providing the platform 16 with a more powerful processor than with providing the UAV 14 the same processor, as the costs (i.e., weight, power requirements, etc.) associated with processing power, such as power requirements, heat dissipation, weight of the hardware, additional hardware required to protect components in-flight, are typically more easily borne by the platform than by the UAV, or rendered unnecessary by their incorporation therein (for example, the platform may comprise a powerful processor for other functions thereof, which could be used to facilitate processing of data collected by a UAV).

The system 10 as described above with reference to and as illustrated in the accompanying figures relates to a platform 16 associated with one or more UAV's 14 to protect a vehicle 12. It will be appreciated that several modifications may be provided without departing from the scope of the presently disclosed subject matter, *mutatis mutandis.* According to some non-limiting examples, the system 10 may be configured to provide protection for several vehicles 12. In an event, e.g., that more than one vehicle 12 is threatened simultaneously, the system 10 may determine which of the vehicles is a higher priority for receiving protection. The determination may be based at least partially on the relative strategic value of the vehicle, the damage it is likely to sustain from the threat, relative to other vehicles, if not protected therefrom, etc.

According to other non-limiting examples, the system may comprise more than one platform 16. The platforms may be on the same vehicle 12, for example wherein one or more serves as a redundant platform, on different vehicles, for example wherein the system 10 provides protection for more than one vehicle, and/or of different types, for example wherein the system comprises a vehicle-based platform as well as an additional platform.

According to further non-limiting examples, each system 10 may be configured to operate together with other systems, for example exchanging data therebetween, directing one another to deploy countermeasures, etc.

According to other non-limiting examples, the system 10 may be configured to adapt to changes in the number of UAV's 14 operating therewith. For example, it may be configured to accommodate a newly added UAV 14 during operation or to relinquish one of its UAV's 14, e.g., to provide assistance for another system. Accordingly, each system 10 may be configured to communication with other systems, for example to request such assistance, and/or to evaluate its ability to provide it upon receipt of such a request.

According to some examples, the UAV's 14 may be configured to communicate among themselves in order to facilitate identifying and/or neutralizing a threat. For example, the UAV's 14 may operate independently (wholly or partially) of the platform 16, e.g., by processing surveillance data to identify the threat, and to direct operation of one of the UAV's 14 to act to neutralize it. They may share information, including, but not limited to, raw surveillance data and/or processed information, among themselves to facilitate accomplishing one or more of such tasks, thereby allowing some or all of the UAV's 14 to utilize information gathered by some or all of the other UAV's and/or the platform 16. Similarly, the system 10 may be designed such that the platform 16 issues instructions to the UAV's 14 to neutralize an identified threat (including information about the threat, e.g., location, trajectory, velocity, threat type, etc.), the UAV's being configured to communicate among themselves in order to determine operational details of the neutralizing, e.g., which UAV should act, etc.

It will be appreciated that the UAV's 14 and/or platform 16, when carrying out any operation (described herein or otherwise), may be configured to utilize statistical data, based on data gathered from some or all of the other elements of the system 10 or of other systems, in order to progressively improve their performance of one or more task. (Such improvements are often referred to as *machine learning*.) These improvements may relate to identification of threats, neutralizing threats, optimization of one or more of its operations, and/or any other suitable task.

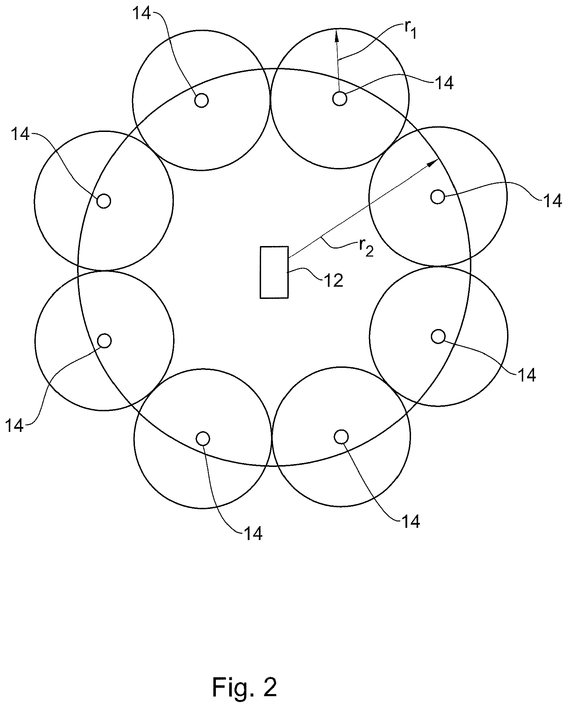

As illustrated schematically in Fig. 2, the system is configured to operate such that several UAV's 14 surround the vehicle 12, each being configured to deploy a soft-kill countermeasure which extends a distance *r₁* therefrom. As the UAV's 14 are spaced far from the vehicle 12, the combined protected area provided by the several UAV's 14 may neutralize a threat at a distance *r₂*, which is larger than *r₁*. As the amount of energy required to deploy the soft-kill countermeasure area increases with the distance which it extends from its source, by providing several smaller zones of protection (e.g., each of radius *r₁*) to effectively protect a larger zone (e.g., having radius *r₂*), the amount of energy required to effect protection to the area defined by the larger radius may be reduced, compared to that required if protection was provided by equipment disposed on the vehicle 12. Accordingly, the system 10 may be used to protect against threats which are at a large distance from the vehicle 12, while expending less energy than would be required to protect from such threats using equipment disposed on the vehicle itself. While the above has been described with reference to a soft-kill countermeasure, it will be appreciated that the same applied, *mutatis mutandis,* to a hard-kill countermeasure.

It will be appreciated that outside of the scope of the claims, e.g., in a situation wherein the direction of the threat is known, the system 10 may be deployed such that UAV's 14 do not completely surround the vehicle 12, but are disposed, for example, on one side thereof.

It will be appreciated that the system 10 may be configured to act autonomously, i.e., automatically and/or without user intervention, to detect and neutralize a threat. In addition, as the UAV's 14 may operate at a distance from the vehicle 12, use of the system 10 to contribute to protection thereof may result in neutralization of threats at distances which are farther from the vehicle than are typical wherein elements for detection and neutralization are located on the vehicle itself. As neutralization of threats may result in collateral damage to the vehicle 12 (e.g., neutralization of a missile may entail an explosion, which itself may cause damage to the vehicle if it occurs at too small a distance therefrom), increasing the distance at which threats may be neutralized may further protect the vehicle, and, in some cases, decrease the weight of protective armor necessary to shield the vehicle from such collateral damage.

Those skilled in the art to which this invention pertains will readily appreciate that numerous changes, variations, and modifications can be made without departing from the scope of the presently disclosed subject matter, *mutatis mutandis.*

## Claims

1. A system (10) for facilitating active protection of a target (12) from a threat, the system comprising:
• one or more platforms (16) configured for directing operation of the system;
and
• a plurality of unmanned aerial vehicles (UAV's; 14) configured to operate in the vicinity of the target, to facilitate detection of said threat and to neutralize said threat,
wherein said platform (16) is configured for autonomously detecting said threat and providing instructions to one or more of said UAV's (14) for neutralizing said threat, wherein each of said UAV's (14) is configured for communicating with said platform (16), **characterized in that** the threat is that of a rocket or missile and **in that** the system (10) is configured to operate such that several UAV's (14) surround the target (12), each UAV (14) being configured to deploy a soft-kill countermeasure.

2. The system (10) according to claim 1, at least some of said UAV's (14) being configured to hover in a fixed location.

3. The system (10) according to any one of claims 1 and 2, at least some of said UAV's (14) being fixed-wing aircraft.

4. The system (10) according to any one of the preceding claims, wherein at least some of said UAV's (14) are configured to receive power from said platform (16) and/or said target (12).

5. The system (10) according to any one of the preceding claims, at least some of said UAV's (14) comprising surveillance equipment (20) configured to facilitate detection of said projectile threat.

6. The system (10) according to claim 5, said UAV's (14) being configured for transmitting surveillance data to said platform (16), said platform being configured for processing said surveillance data to detect said projectile threat.

7. The system (10) according to any one of the preceding claims, said platform (16) being configured to communicate with an active protection system for directing operation thereof.

8. The system (10) according to claim 7, wherein one or more of said UAV's (14) and/or said platform (16) comprises said active protection system.

9. The system (10) according to any one of claims 7 and 8, wherein said active protection system comprises one or more hard-kill countermeasures and/or one or more soft-kill countermeasures.

10. The system (10) according to any one of the preceding claims, wherein one or more of said UAV's (14) are configured for intercepting said projectile threat to neutralize it.

11. The system (10) according to any one of the preceding claims, wherein each of said UAV's (14) comprises a location sensor configured to determine the absolute location thereof.

12. The system (10) according to any one of the preceding claims, being configured to determine the relative location of each of the UAV's (14) with respect to the platform (16) and/or other of the UAV's.

13. The system (10) according to any one of the preceding claims, wherein said platform (16) is configured for installation on said target (12).

14. The system (10) according to any one of the preceding claims, wherein said target (12) is a vehicle.

15. The system (10) according to any one of the preceding claims, configured to implement machine learning to improve performance of at least one task.

## Patentansprüche

1. Ein System (10) zur Erleichterung des aktiven Schutzes eines Ziels (12) vor einer Bedrohung, wobei das System Folgendes umfasst:
• eine oder mehrere Plattformen (16), konfiguriert zum Leiten des Betriebs des Systems; und
• eine Vielzahl unbemannter Luftfahrzeuge (Unmanned Aeriel Vehicles UAV's (14)) ausgebildet, um in der Nähe des Ziels zu arbeiten, um den Nachweis der Bedrohung zu erleichtern und die Bedrohung zu neutralisieren,
wobei die Plattform (16) konfiguriert ist, um die Bedrohung autonom zu Erfassen und einem oder mehreren UAV's (14) Anweisungen zu geben, um die Bedrohung zu neutralisieren, wobei jedes der UAV's (14) konfiguriert ist, um mit der Plattform (16) zu kommunizieren, **dadurch gekennzeichnet, dass** die Bedrohung eine Rakete oder ein Geschoss ist und dadurch, dass das System (10) konfiguriert ist, umso zu arbeiten, dass mehrere UAV's (14) das Ziel (12) umringen, wobei jedes UAV (14) ausgebildet ist, um eine Softkill-Gegenmaßnahme bereitzustellen.

2. Das System (10) gemäß Anspruch 1, wobei mindestens einige der UAV's (14) ausgebildet sind, um in einer festen Position zu schweben.

3. Das System (10) gemäß einem beliebigen der Ansprüche 1 und 2, wobei mindestens einige der UAV's (14) Starrflügler sind.

4. Das System (10) gemäß einem beliebigen der obigen Ansprüche, wobei mindestens einige der UAV's (14) ausgebildet sind, um Strom von der Plattform (16) und/oder dem Ziel (12) zu erhalten.

5. Das System (10) gemäß einem beliebigen der obigen Ansprüche, wobei mindestens einige der UAV's (14) Überwachungsausrüstung (20) umfassen, die ausgebildet ist, um die Erfassung der Projektilbedrohung zu erleichtern.

6. Das System (10) gemäß Anspruch 5, wobei die UAV's (14) ausgebildet sind, um Überwachungsdaten an die Plattform (16) zu senden, wobei die Plattform ausgebildet ist, um die Überwachungsdaten zu verarbeiten, um die Projektilbedrohung zu erfassen.

7. Das System (10) gemäß einem beliebigen der obigen Ansprüche, wobei die Plattform (16) ausgebildet ist, um mit einem aktiven Schutzsystem zu kommunizieren, um dessen Betrieb zu lenken.

8. Das System (10) gemäß Anspruch 7, worin eines oder mehrere der UAV's (14) und/oder die Plattform (16) das aktive Schutzsystem umfassen.

9. Das System (10) gemäß einem beliebigen der Ansprüche 7 und 8, worin das aktive Schutzsystem, eine oder mehrere Hartkill-Gegenmaßnahmen und/oder eine oder mehrere Softkill-Gegenmaßnahmen umfasst.

10. Das System (10) gemäß einem beliebigen der obigen Ansprüche, worin eines oder mehrere der UAV's (14) ausgebildet sind, um die Projektilbedrohung abzufangen, um sie zu neutralisieren.

11. Das System (10) gemäß einem beliebigen der obigen Ansprüche, worin jedes der UAV's (14), einen Positionssensor umfasst, der ausgebildet ist, um die absolute Position des Selben zu bestimmen.

12. Das System (10) gemäß einem beliebigen der obigen Ansprüche, das ausgebildet ist, um die relative Position jedes der UAV's (14) mit Bezug auf die Plattform (16) und/oder andere der UAV's zu bestimmen.

13. Das System (10) gemäß einem beliebigen der obigen Ansprüche, worin die Plattform (16), zur Installation auf dem Ziel (12) ausgebildet ist.

14. Das System (10) gemäß einem beliebigen der obigen Ansprüche, worin das Ziel (12) ein Fahrzeug ist.

15. Das System (10) gemäß einem beliebigen der obigen Ansprüche, dass ausgebildet ist, um maschinelles Lernen einzusetzen, um die Leistung mindestens einer Arbeit zu verbessern.

## Revendications

1. Système (10) destiné à faciliter la protection active d'une cible (12) contre une menace, le système comprenant :
• une ou plusieurs plateformes (16) configurées pour diriger le fonctionnement du système ; et
• une pluralité de véhicules aériens sans pilote (UAV ; 14) configurés pour fonctionner dans le voisinage de la cible, pour faciliter la détection de ladite menace et pour neutraliser ladite menace,
dans lequel ladite plateforme (16) est configurée pour détecter de façon autonome ladite menace et fournir des instructions à un ou plusieurs desdits UAV (14) pour neutraliser ladite menace, dans lequel chacun desdits UAV (14) est configuré pour communiquer avec ladite plateforme (16), **caractérisé en ce que** la menace est celle d'une roquette ou d'un missile et **en ce que** le système (10) est configuré pour fonctionner de telle manière que plusieurs UAV (14) entourent la cible (12), chaque UAV (14) étant configuré pour déployer une contre-mesure non destructive (*soft*-*kill*).

2. Système (10) selon la revendication 1, au moins certains desdits UAV (14) étant configurés pour être en vol stationnaire à un emplacement fixe.

3. Système (10) selon l'une quelconque des revendications 1 et 2, au moins certains desdits UAV (14) étant des aéronefs à voilure fixe.

4. Système (10) selon l'une quelconque des revendications précédentes, dans lequel au moins certains desdits UAV (14) sont configurés pour recevoir de l'énergie de ladite plateforme (16) et/ou de ladite cible (12).

5. Système (10) selon l'une quelconque des revendications précédentes, au moins certains desdits UAV (14) comprenant de l'équipement de surveillance (20) configuré pour faciliter la détection de ladite menace projectile.

6. Système (10) selon la revendication 5, lesdits UAV (14) étant configurés pour transmettre des données de surveillance à ladite plateforme (16), ladite plateforme étant configurée pour traiter lesdites données de surveillance afin de détecter ladite menace projectile.

7. Système (10) selon l'une quelconque des revendications précédentes, ladite plateforme (16) étant configurée pour communiquer avec un système de protection active pour diriger son fonctionnement.

8. Système (10) selon la revendication 7, dans lequel un ou plusieurs desdits UAV (14) et/ou ladite plateforme (16) comprennent ledit système de protection active.

9. Système (10) selon l'une quelconque des revendications 7 et 8, dans lequel ledit système de protection active comprend une ou plusieurs contre-mesures destructives (*hard*-*kill*) et/ou une ou plusieurs contre-mesures non destructives (*soft-kill*)*.*

10. Système (10) selon l'une quelconque des revendications précédentes, dans lequel un ou plusieurs desdits UAV (14) sont configurés pour intercepter ladite menace projectile afin de la neutraliser.

11. Système (10) selon l'une quelconque des revendications précédentes, dans lequel chacun desdits UAV (14) comprend un capteur d'emplacement configuré pour déterminer son emplacement absolu.

12. Système (10) selon l'une quelconque des revendications précédentes, configuré pour déterminer l'emplacement relatif de chacun des UAV (14) par rapport à la plateforme (16) et/ou à d'autres des UAV.

13. Système (10) selon l'une quelconque des revendications précédentes, dans lequel ladite plateforme (16) est configurée pour être installée sur ladite cible (12).

14. Système (10) selon l'une quelconque des revendications précédentes, dans lequel ladite cible (12) est un véhicule.

15. Système (10) selon l'une quelconque des revendications précédentes, configuré pour mettre en œuvre un apprentissage automatique afin d'améliorer l'exécution d'au moins une tâche.
